(19) Europäisches Patentamt
European Patent Office
Office européen des brevets

(11)  **EP 1 772 303 B1**

(12)  **FASCICULE DE BREVET EUROPEEN**

(45)  Date de publication et mention
de la délivrance du brevet:
**22.07.2009   Bulletin 2009/30**

(51)  Int Cl.:
***B60L 9/30*** *(2006.01)*      ***B60L 9/24*** *(2006.01)*

(21)  Numéro de dépôt: **06291498.1**

(22)  Date de dépôt: **22.09.2006**

(54)  **Procédé et système de mise sous tension d'un bus d'alimentation d'un véhicule électrique, support d'enregistrement et véhicule pour ce procédé**

Verfahren und System zum Einschalten eines Versorgungsbus eines elektrischen Fahrzeugs, Datenträger und Fahrzeug zur Durchführung des Verfahrens

Method and system for switching on a supply bus of an electric vehicle, storage medium and vehicle for carrying out the method

(84)  Etats contractants désignés:
**AT BE BG CH CY CZ DE DK EE ES FI FR GB GR HU IE IS IT LI LT LU LV MC NL PL PT RO SE SI SK TR**

(30)  Priorité:  **07.10.2005   FR 0510282**

(43)  Date de publication de la demande:
**11.04.2007   Bulletin 2007/15**

(73)  Titulaire: **ALSTOM Transport SA**
**92300 Levallois-Perret (FR)**

(72)  Inventeur: **Chanal, Pierre**
**65360 Vielle Adour (FR)**

(74)  Mandataire: **Blot, Philippe Robert Emile et al**
**Cabinet Lavoix**
**2, place d'Estienne d'Orves**
**75441 Paris Cedex 09 (FR)**

(56)  Documents cités:
**EP-A- 1 288 060            EP-A- 1 315 180**
**DE-C1- 19 702 132**

**Description**

L'invention concerne un procédé et un système de mise sous tension d'un bus d'alimentation d'un véhicule électrique, un support d'enregistrement et un véhicule pour ce procédé

Par bus d'alimentation continue on désigne le bus raccordable par l'intermédiaire successivement d'un redresseur-élévateur commandable de tension et d'un transformateur principal à une première caténaire délivrant une première tension alternative. Le transformateur principal est équipé au secondaire d'une première borne de raccordement correspondant à un premier rapport d'enroulements du transformateur.

Le rapport d'enroulements est défini ici comme étant le rapport du nombre de spires utilisées au secondaire sur le nombre de spires utilisées au primaire du transformateur principal pour effectuer la transformation de tensions alternatives.

Pour réaliser la mise sous tension du bus à partir de la première caténaire, un procédé est connu par le document EP-A-1288060. On connaît également un procédé qui comporte :

- une étape de commande de la fermeture d'un interrupteur de précharge pour raccorder le bus à la première borne par l'intermédiaire d'un limiteur d'appel de courant dû à au moins une unité de stockage temporaire d'énergie rechargeable du bus, puis
- lorsque la tension continue du bus dépasse 70% de sa valeur nominale, une étape de commande de la fermeture d'un premier interrupteur d'isolement pour raccorder le bus à la première borne sans passer par le limiteur de courant d'appel,

Ici, par « fermer » on désigne l'action de rendre passant l'interrupteur et par « ouvrir » l'action de rendre non passant l'interrupteur.

Aujourd'hui, il est requis par des opérateurs de ces véhicules électriques que la mise sous tension du même bus puisse se faire à partir de la première caténaire et, en alternance, à partir d'une seconde caténaire délivrant une seconde tension moins élevée que la première tension. A cet effet, le transformateur principal est équipé au secondaire d'une seconde borne de raccordement correspondant à un second rapport d'enroulements du transformateur principal plus grand que le premier rapport d'enroulement.

Dans ce contexte, l'invention propose un procédé susceptible de réaliser la mise sous tension du bus d'alimentation continue du véhicule électrique à partir de la première caténaire et, en alternance, à partir de la seconde caténaire.

L'invention a donc pour objet un procédé de mise sous tension comportant lors de la mise sous tension du bus à partir de la seconde caténaire :

- une étape de commande de la fermeture de l'interrupteur de précharge pour raccorder le bus à la première borne par l'intermédiaire du même limiteur de courant, puis
- lorsque la tension continue du bus a atteint au moins 70% d'une tension maximale intermédiaire définie par la relation suivante :

$$V_{mi} = \frac{V_2}{V_1} \times V_n$$

où :

$V_{mi}$ est la tension maximale intermédiaire,
$V_1$ est la première tension,
$V_2$ est la seconde tension, et
$V_n$ est la tension nominale,

une étape de commande du redresseur-élévateur pour redresser et élever la tension alternative délivrée par la première borne et alimenter le bus avec la tension ainsi redressée et élevée, puis

- lorsque la tension continue sur le bus atteint au moins 70% de la tension nominale, une étape de commande de la déconnexion du bus de la première borne et une étape de commande de la fermeture d'un second interrupteur d'isolement pour raccorder le bus à la seconde borne sans passer par le circuit de précharge.

Le procédé ci-dessus permet de réaliser la mise sous tension du bus à partir de la seconde caténaire en limitant l'appel de courant. De plus, grâce au procédé ci-dessus, la limitation d'appel de courant est obtenue en utilisant le même limiteur d'appel de courant que celui utilisé pour limiter l'appel de courant lors de la mise sous tension à partir de la première caténaire. Ce procédé nécessite donc très peu de modifications matérielles des circuits électriques existants pour être mis en oeuvre et notamment ne nécessite pas l'ajout d'un second limiteur d'appel de courant dont l'usage serait réservé aux mises sous tension à partir de la seconde caténaire.

Les modes de réalisation de ce procédé peuvent comporter une ou plusieurs des caractéristiques suivantes :

- lorsque l'interrupteur de précharge est fermé, le redresseur-élévateur n'est pas commandé et fonctionne comme un pont de diodes ;
- le redresseur-élévateur est systématiquement commandé pour fonctionner en redresseur et en élévateur lorsque le premier ou le second interrupteur d'isolement est fermé.

L'invention a également pour objet un support d'enregistrement d'informations comportant des instructions pour l'exécution du procédé de mise sous tension ci-dessus, lorsque ces instructions sont exécutées par un calculateur électronique.

L'invention a également pour objet un système de mise sous tension d'un bus d'alimentation continue d'un moteur électrique tournant d'un véhicule électrique de manière à ce que la tension continue du bus atteigne une valeur nominale, ce système comportant :

- un transformateur principal dont le primaire est raccordable à une première caténaire délivrant une première tension alternative ($V_1$) et, en alternance, à une seconde caténaire délivrant une seconde tension alternative ($V_2$) moins élevée, le transformateur principal étant équipé au secondaire d'une première et d'une seconde bornes de raccordement correspondant respectivement à un premier et à un second rapports d'enroulements du transformateur, le second rapport du transformateur étant plus grand que le premier rapport d'enroulements,
- un circuit commandable de mise sous tension raccordé à la première et à la seconde bornes du transformateur principal, ce circuit comportant :

  • un limiteur d'appel de courant dû à au moins une unité de stockage temporaire d'énergie rechargeable du bus,
  • un interrupteur de précharge apte à raccorder le bus à la première borne par l'intermédiaire du limiteur d'appel du courant,
  • un premier interrupteur d'isolement apte à raccorder le bus à la première borne sans passer par le limiteur d'appel de courant, et
  • un second interrupteur d'isolement apte à raccorder le bus à la seconde borne sans passer par le limiteur d'appel de courant,

- un redresseur-élévateur commandable de tension raccordé au bus d'alimentation pour l'alimenter en tension redressée construite à partir d'une tension alternative délivrée au travers du circuit de mise sous tension par la première ou la seconde borne, et
- une unité de commande du circuit de mise sous tension et du redresseur-élévateur,

dans lequel l'unité de commande est programmée pour exécuter le procédé de mise sous tension ci-dessus.

Les modes de réalisation de ce système de mise sous tension peuvent comporter une ou plusieurs des caractéristiques suivantes :

- le circuit de mise sous tension comporte un seul limiteur d'appel de courant commun à la mise sous tension à partir de la première caténaire et, en alternance, à partir de la seconde caténaire ;
- le limiteur d'appel de courant est une résistance.

Les modes de réalisation de ce système de mise sous tension présentent en outre l'avantage suivant :

- l'utilisation d'un seul limiteur de courant et/ou le fait que ce limiteur de courant soit une simple résistance simplifie le système et donc décroît son coût de fabrication.

Enfin, l'invention a également pour objet un véhicule électrique comportant le système de mise sous tension décrit ci-dessus.

L'invention sera mieux comprise à la lecture de la description qui va suivre donnée uniquement à titre d'exemple et faite en se référant aux dessins sur lesquels :

- la figure 1 est une illustration schématique d'un véhicule électrique équipé d'un système de mise sous tension d'un bus d'alimentation continue ;
- la figure 2 est un organigramme d'un procédé de mise sous tension utilisé dans le système de la figure 1 ; et
- la figure 3 est un graphe représentant l'évolution de la tension continue du bus d'alimentation continue du véhicule de la figure 1 en fonction du temps lorsque le procédé de la figure 2 est exécuté.

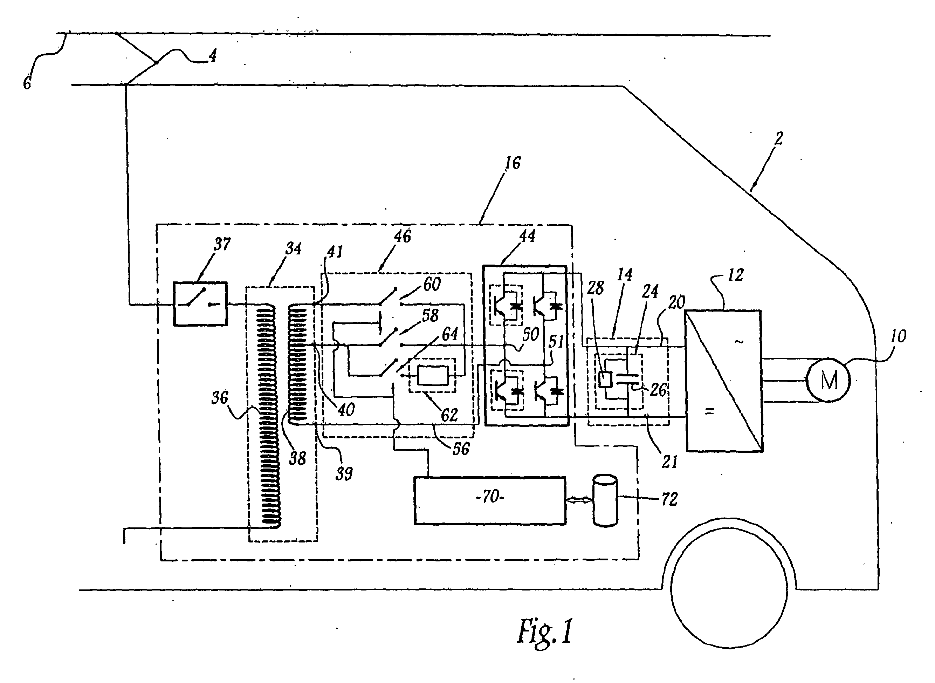

La figure 1 représente un véhicule électrique 2 alimenté en tension alternative par l'intermédiaire d'un pantographe 4 glissant sur une caténaire 6.

Par caténaire, on désigne ici aussi bien un fil d'alimentation suspendu en l'air sur lequel vient frotter un pantographe, qu'un rail d'alimentation posé sur le sol sur lequel vient frotter un patin. Dans le domaine ferroviaire, ce rail posé sur le sol est connu sous le terme de « troisième rail ».

Ici, le véhicule 2 est, par exemple, une locomotive.

Le véhicule 2 est équipé d'un moteur électrique asynchrone propre à entraîner en rotation des roues motrices du véhicule 2. Typiquement, le véhicule 2 comporte autant de moteurs électriques asynchrones que d'essieux du véhicule 2.

Chaque moteur électrique est alimenté successivement par l'intermédiaire d'un convertisseur de tension, d'un bus de tension d'alimentation continue et d'un système de mise sous tension et d'alimentation du bus. Le bus de tension d'alimentation continue est connu sous le terme de « bus DC ».

Ici, pour simplifier l'illustration, seul un moteur électrique asynchrone 10 ainsi que son convertisseur 12, son bus 14 et son système 16 de mise sous tension et d'alimentation sont représentés pour simplifier la figure 1.

Le convertisseur 12 est apte à convertir la tension continue $V_{bus}$ présente sur le bus 14 en une tension alternative triphasée utilisée pour alimenter des enroulements statoriques du moteur 10. Le circuit de commande du convertisseur 12 n'est pas représenté.

Le bus 14 est formé de deux conducteurs électriques 20 et 21 raccordés, d'un côté, à des entrées respectives du convertisseur 12 et, de l'autre côté, au système 16.

Ce bus 14 comporte des unités de stockage temporaires d'énergie rechargeable pour maintenir temporairement la tension $V_{bus}$ sur ce bus même en cas de coupure d'alimentation. Ici, seule l'une de ces unités 24 a été représentée.

Cette unité 24 est formée d'un condensateur 26 raccordé entre les conducteurs 20 et 21 et d'une résistance 28 de décharge raccordée en parallèle aux bornes de ce condensateur 26.

Après sa mise sous tension, le bus 14 présente en régime permanent une tension nominale $V_n$ égale, par exemple, à 1800Vdc.

Le système 16 permet de mettre sous tension le bus 14 et d'alimenter ce bus 14 aussi bien à partir d'une caténaire présentant une tension alternative de 15 kV qu'à partir d'une caténaire présentant une tension alternative de 25 kV. Les caténaires présentant une tension de 25 kV se rencontrent, par exemple, dans des pays comme la France et l'Italie tandis que des caténaires présentant une tension de 15 kV se rencontrent, par exemple, dans des pays comme l'Allemagne. Ainsi, le système 16 permet de faire fonctionner le véhicule 2 aussi bien sur des réseaux de voies ferrées allemands que français.

Le système 16 comprend un transformateur principal 34 de tension équipé d'un enroulement primaire 36 raccordé au pantographe 4 par l'intermédiaire d'un disjoncteur 37. Le nombre de spires de l'enroulement 36 est noté $n_1$.

Le transformateur 34 comporte également un enroulement secondaire 38 équipé de trois bornes de raccordement 39, 40 et 41. Les nombres de spires de l'enroulement 38 entre, respectivement, les bornes 39 et 40 et les bornes 39 et 41 sont notées $n_{25}$ et $n_{15}$.

A l'intérieur du système 16, un redresseur-élévateur commandable 44 est raccordé en entrée par l'intermédiaire d'un circuit commandable 46 de mise sous tension aux bornes 39 à 41.

Le redresseur-élévateur 44 est équipé de deux bornes de sortie raccordées respectivement aux conducteurs 20 et 21 du bus 14.

Ce redresseur-élévateur 44 est apte à fonctionner comme un pont de diodes lorsque celui-ci n'est pas commandé et comme un redresseur-élévateur de tension lorsque celui-ci est commandé.

Schématiquement, le redresseur-élévateur 44 comprend deux bras parallèles formés chacun de deux interrupteurs raccordés en série par l'intermédiaire de points milieux respectifs 50 et 51. Les extrémités de chacun de ces bras sont raccordées aux conducteurs 20 et 21 du bus 14.

De manière à pouvoir fonctionner en pont de diodes lorsque ce redresseur-élévateur n'est pas commandé, chaque interrupteur est, par exemple, formé d'un transistor PNP aux bornes duquel est raccordée en parallèle une diode de roue libre. De tels redresseurs-élévateurs étant classiques celui-ci ne sera pas décrit plus en détail.

Le circuit 46 de mise sous tension raccorde le point milieu 51 à la borne 39 de l'enroulement 38. Le circuit 46 est également apte à raccorder le point milieu 50 à la borne 40 et, en alternance, à la borne 41. A cet effet, le circuit 46 comprend :

- un conducteur 56 raccordant la borne 39 directement au point milieu 51,
- un interrupteur commandable d'isolement 58 propre à raccorder, lorsqu'il est fermé, la borne 40 au point milieu 50 et, lorsqu'il est ouvert, à isoler la borne 40 du point milieu 50, et
- un interrupteur commandable d'isolement 60 propre à raccorder la borne 41 au point milieu 50 lorsqu'il est fermé et à isoler la borne 41 du point milieu 50 lorsqu'il est ouvert.

Le circuit 46 comprend également un limiteur 62 d'appel de courant dû à l'unité 24. Ce limiteur 62 est raccordé en parallèle aux bornes de l'interrupteur 58. Par exemple, ici, ce limiteur 62 est uniquement formé d'une résistance dont la valeur est comprise entre 25 et 150 $\Omega$.

Un interrupteur commandable de précharge 64 est également raccordé en série avec le limiteur 62 et en parallèle aux bornes de l'interrupteur 58.

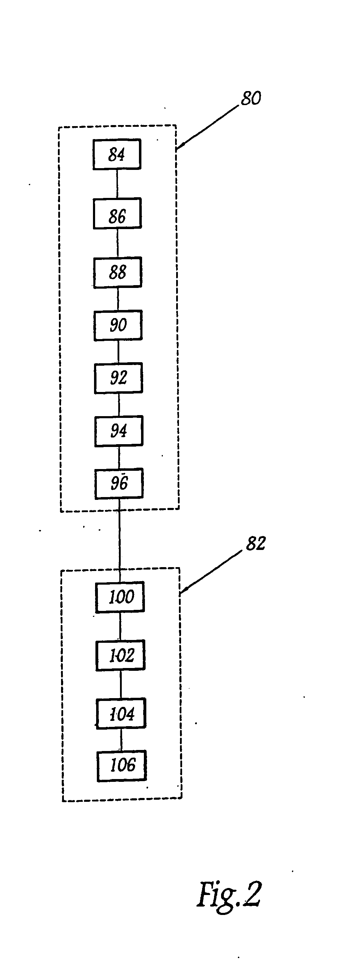

Enfin, le système 16 comprend une unité de commande 70 propre à commander la fermeture et l'ouverture des interrupteurs 58, 60 et 64 ainsi que le redresseur-élévateur 44. Plus précisément, l'unité de commande 70 est apte à exécuter le procédé de mise sous tension de la figure 2.

Cette unité de commande 70 est, par exemple, ici réalisée à partir d'un calculateur électronique programmable conventionnel apte à exécuter des instructions enregistrées sur un support d'enregistrement d'informations 72. A cet effet, le support 72 comporte des instructions pour l'exécution du procédé de la figure 2 lorsque ces instructions sont exécutées par l'unité 70.

Le fonctionnement du système 16 va maintenant être décrit en regard du procédé de la figure 2.

Le procédé de la figure 2 se compose essentiellement de deux phases 80 et 82.

Lors de la phase 80, le bus 14 est mis sous tension à partir d'une caténaire présentant une tension alternative de 15 kV.

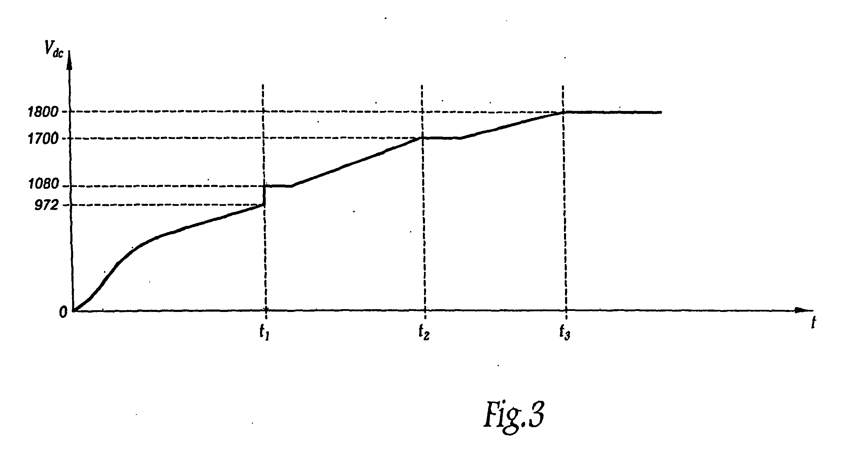

Initialement, comme indiqué sur le graphe de la figure 3, la tension $V_{bus}$ du bus 14 est nulle et les interrupteurs 58, 60 et 64 sont ouverts. Le transformateur 34 est alimenté en tension alternative de 15 kV par l'intermédiaire du disjoncteur 37 et du pantographe 4.

Pour commencer, l'unité 70 commande la fermeture de l'interrupteur 64, lors d'une étape 84. Le redresseur-élévateur 44 n'est pas commandé de sorte qu'il fonctionne comme un pont de diodes. Dans ces circonstances le transformateur 34 transforme la tension de 15 kV en une tension alternative $V_r$ de l'ordre de 570 Vac. Cette tension $V_r$ est redressée par le redresseur-élévateur 44 et alimente le bus 14. Le condensateur 26 se charge progressivement avec une constante de temps fonction de la valeur de la résistance du limiteur 62. On comprend ainsi que le limiteur 62 ralentit la charge du condensateur 26 et donc limite l'appel de courant dû à la présence de l'unité 24 de stockage d'énergie. L'étape 84 dure, par exemple, pendant un intervalle de temps égal à 3RC, où R est la valeur de la résistance du limiteur 62 et C est la capacité du condensateur 26 de manière à obtenir une tension sur le bus $V_{bus}$ supérieure à 70% d'une tension maximale intermédiaire $V_{mi}$ définie par la relation suivante :

$$V_{mi} = \frac{V_2}{V_1} \times V_n$$

où :

$V_1$ est la tension de 25 kV,
$V_2$ est la tension de 15 kV, et
$V_n$ est la tension nominale égale ici à 1800Vdc

Cette tension $V_{mi}$ correspond à la tension maximale continue qui peut être atteinte sur le bus 14 en alimentant ce bus à partir d'une tension alternative prélevée entre les bornes 39 et 40 de l'enroulement 38.

Plus précisément, ici puisque l'intervalle de temps est choisi égal à 3RC, la tension $V_{bus}$ à la fin de l'étape 84 est égale à 90% de la tension $V_{mi}$ soit ici approximativement égale à 972 Vdc.

Sur le graphe de la figure 3, la fin de l'étape 84 correspond à l'instant $t_1$.

A l'instant $t_1$, lors d'une étape 86, l'unité 70 commande la fermeture de l'interrupteur 58, puis lors d'une étape 88, l'ouverture de l'interrupteur 64. Lorsque l'interrupteur 58 est fermé, ceci court-circuite le limiteur 62 de sorte que la tension aux bornes du condensateur 26 atteint brusquement la tension $V_{mi}$

Ensuite, lors d'une étape 90, l'unité 70 commande le redresseur-élévateur 44 pour redresser et élever la tension $V_r$ de manière à atteindre une tension sur le bus 14 supérieure à au moins 70% de la tension nominale $V_n$. Par exemple ici, le redresseur-élévateur 44 est commandé pour atteindre une tension de 1700Vdc sur le bus 14. L'étape 90 dure jusqu'à ce que la tension de 1700Vdc soit atteinte ce qui se produit à un instant $t_2$ sur la figure 3.

Lorsque la tension de 1700Vdc est atteinte sur le bus 14, l'unité 70 commande, lors d'une étape 92, l'ouverture de l'interrupteur 58 et, lors d'une étape 94 la fermeture de l'interrupteur 60. A partir de ce moment-là, la tension $V_r$ en entrée du redresseur-élévateur 44 correspond à la tension présente entre les bornes 39 et 41 de l'enroulement 38. Le rapport d'enroulements du transformateur dans ces conditions étant plus grand, la tension $V_r$ est donc plus grande que celle précédemment utilisée. Par exemple ici, la tension $V_r$ est égale à 950Vac.

Dès que l'interrupteur 60 est fermé, l'unité 70 commande, lors d'une étape 96, le redresseur-élévateur 44 pour que la tension $V_{bus}$ atteigne la valeur de 1800Vdc c'est-à-dire la valeur nominale à l'instant $t_3$.

A partir de l'instant $t_3$, le régime en fonctionnement permanent du système 16 est atteint.

Lorsque le véhicule change de réseau de voie ferrée et circule sur une voie ferrée dont la caténaire présente une tension de 25kV, il est alors nécessaire de procéder à la phase 82 de mise sous tension à partir d'une caténaire sous 25kV.

Avant le début de la mise sous tension, l'état initial est le même que celui précédant la phase 80.

Au début de la phase 82, l'unité 70 commande, lors d'une étape 100, la fermeture de l'interrupteur 64. Le redresseur-élévateur 44 n'est pas commandé et fonctionne en pont de diodes. Dans ces conditions, la tension $V_r$ est égale à 950Vac puisque la tension aux bornes de l'enroulement primaire 36 est égale à 25 kV. L'étape 100 dure, par exemple, pendant un intervalle de temps choisi égal à 3RC de sorte qu'à la fin de l'étape 100, le condensateur 26 est chargé à 90% de sa capacité et la tension $V_{bus}$ est égale à 1620Vdc.

Ensuite, lors d'une étape 102, l'unité 70 commande la fermeture de l'interrupteur 58 puis, lors d'une étape 104, l'unité 70 commande l'ouverture de l'interrupteur 64.

Dès que l'interrupteur 58 est fermé, l'unité 70 commande, lors d'une étape 106, le redresseur-élévateur 44 pour atteindre la tension nominale $V_n$ sur le bus 14.

L'étape 100 permet de limiter l'appel de courant dû à l'unité 24.

De nombreux autres modes de réalisation du système 16 et du procédé de la figure 2 sont possibles. Par exemple, il est possible de maintenir simultanément fermés l'interrupteur 64 et l'interrupteur 58 ou l'interrupteur 64 et l'interrupteur 60. Le procédé de la figure 2 à été décrit dans le cas particulier d'un circuit de mise sous tension comportant un seul limiteur de courant d'appel commun aussi bien à une alimentation à partir d'une caténaire à 15kV qu'à partir d'une caténaire à 25kV. Toutefois en variante, un second limiteur d'appel de courant est raccordé par l'intermédiaire d'un second interrupteur de précharge en parallèle de l'interrupteur 60 et le second interrupteur de précharge est commandé lors de la mise sous tension à partir d'une caténaire à 15kV pour limiter le courant d'appel. Dans un tel mode de réalisation, le procédé de la figure 2 peut être utilisé en cas de défaillance du second interrupteur de précharge ou du second limiteur d'appel de courant.

Enfin, le transformateur 34 a été décrit dans le cas particulier où la borne 40 est un point intermédiaire de l'enroulement 38. L'enroulement 38 en variante est remplacé par un premier et un second enroulements secondaires raccordés en parallèle entre les bornes d'entrée du redresseur-élévateur 44. Les premier et second enroulements secondaires présentent respectivement des rapports d'enroulements égaux à ceux observés entre les bornes 39 et 40 et entre les bornes 39 et 41.

## Revendications

1. Procédé de mise sous tension d'un bus d'alimentation continue d'un moteur électrique tournant d'un véhicule électrique de manière à ce que la tension continue du bus atteigne une valeur nominale, le bus étant raccordable par l'intermédiaire successivement d'un redresseur-élévateur commandable de tension et d'un transformateur principal à une première caténaire délivrant une première tension alternative ($V_1$) et, en alternance, à une seconde caténaire délivrant une seconde tension alternative ($V_2$) moins élevée, le transformateur principal étant équipé au secondaire d'une première et d'une seconde bornes de raccordement correspondant respectivement à un premier et un second rapports d'enroulements du transformateur principal, le second rapport d'enroulements étant plus grand que le premier rapport d'enroulements, le procédé comportant lors de la mise sous tension du bus à partir de la première caténaire :

   - une étape (100) de commande de la fermeture d'un interrupteur de précharge pour raccorder le bus à la première borne par l'intermédiaire d'un limiteur d'appel de courant dû à au moins une unité de stockage temporaire d'énergie rechargeable du bus, puis
   - lorsque la tension continue du bus dépasse 70% de sa valeur nominale, une étape (102) de commande de la fermeture d'un premier interrupteur d'isolement pour raccorder le bus à la première borne sans passer par le limiteur de courant d'appel,

   **caractérisé en ce que** le procédé comporte lors de la mise sous tension du bus à partir de la seconde caténaire :

   - une étape (84) de commande de la fermeture de l'interrupteur de précharge pour raccorder le bus à la première borne par l'intermédiaire du même limiteur de courant, puis
   - lorsque la tension continue du bus a atteint au moins 70% d'une tension maximale intermédiaire définie par la relation suivante :

$$V_{mi} = \frac{V_2}{V_1} \times V_n$$

où :

   $V_{mi}$ est la tension maximale intermédiaire,
   $V_1$ est la première tension,
   $V_2$ est la seconde tension, et
   $V_n$ est la tension nominale,

une étape (90) de commande du redresseur-élévateur pour redresser et élever la tension alternative délivrée par la première borne et alimenter le bus avec la tension ainsi redressée et élevée, puis

   - lorsque la tension continue sur le bus atteint au moins 70% de la tension nominale, une étape (92) de commande de la déconnexion du bus de la première borne et une étape (94) de commande de la fermeture d'un second interrupteur d'isolement pour raccorder le bus à la seconde borne sans passer par le circuit de précharge.

2. Procédé selon la revendication 1, **caractérisé en ce que** lorsque l'interrupteur de précharge est fermé, le redresseur-élévateur n'est pas commandé et fonctionne comme un pont de diodes.

3. Procédé selon l'une quelconque des revendications précédentes, **caractérisé en ce que** le redresseur-élévateur est systématiquement commandé (90, 96) pour fonctionner en redresseur et en élévateur lorsque le premier ou le second interrupteur d'isolement est fermé.

4. Support d'enregistrement d'informations, **caractérisé en ce qu'**il comporte des instructions pour l'exécution d'un procédé de mise sous tension conforme à l'une quelconque des revendications précédentes, lorsque ces instructions sont exécutées par un calculateur électronique.

5. Système de mise sous tension d'un bus d'alimentation continue d'un moteur électrique tournant d'un véhicule électrique de manière à ce que la tension continue du bus atteigne une valeur nominale, ce système comportant :

   - un transformateur principal (34) dont le primaire est raccordable à une première caténaire délivrant une première tension alternative ($V_1$) et, en alternance, à une seconde caténaire délivrant une seconde tension alternative ($V_2$) moins élevée, le transformateur principal étant équipé au secondaire d'une première et d'une seconde bornes (40, 41) de raccordement correspondant respectivement à un premier et à un second rapports d'enroulements du transformateur, le second rapport du transformateur étant plus grand que le premier rapport d'enroulements,

- un circuit commandable (46) de mise sous tension raccordé à la première et à la seconde bornes du transformateur principal, ce circuit comportant :

• un limiteur (62) d'appel de courant dû à au moins une unité (24) de stockage temporaire d'énergie rechargeable du bus,
• un interrupteur (64) de précharge apte à raccorder le bus à la première borne par l'intermédiaire du limiteur d'appel du courant,
• un premier interrupteur d'isolement (58) apte à raccorder le bus à la première borne sans passer par le limiteur d'appel de courant, et
• un second interrupteur (60) d'isolement apte à raccorder le bus à la seconde borne sans passer par le limiteur d'appel de courant,

- un redresseur-élévateur commandable de tension (44) raccordé au bus d'alimentation pour l'alimenter en tension redressée construite à partir d'une tension alternative délivrée au travers du circuit de mise sous tension par la première ou la seconde borne, et
- une unité (70) de commande du circuit de mise sous tension et du redresseur-élévateur,

**caractérisé en ce que** l'unité de commande est programmée pour exécuter un procédé de mise sous tension conforme à l'une quelconque des revendications 1 à 3.

6. Système selon la revendication 5, **caractérisé en ce que** le circuit (46) de mise sous tension comporte un seul limiteur (62) d'appel de courant commun à la mise sous tension à partir de la première caténaire et, en alternance, à partir de la seconde caténaire.

7. Système selon la revendication 5 ou 6, **caractérisé en ce que** le limiteur (62) d'appel de courant est une résistance.

8. Véhicule électrique, **caractérisé en ce qu'**il comporte un système de mise sous tension conforme à l'une quelconque des revendications 5 à 7.

**Claims**

1. Method for applying a voltage to a continuous supply bus of an electric motor which operates an electric vehicle so that the continuous voltage of the bus reaches a nominal value, the bus being able to be connected by means successively of a controllable voltage rectifier-booster and by a main transformer to a first catenary which delivers a first alternating voltage ($V_1$) and, alternately, to a second catenary which delivers a second alternating voltage ($V_2$) which is lower, the main transformer being fitted to the secondary of a first and of a second connection terminal corresponding respectively to a first and a second winding ratio of the main transformer, the second winding ratio being greater than the first winding ratio,
the method comprising when applying a voltage to the bus from the first catenary:

- a step (100) for controlling the closure of an initial load circuit breaker in order to connect the bus to the first terminal by means of a limiter of surge current due to at least one unit for temporary storage of rechargeable energy of the bus, then
- when the continuous voltage of the bus exceeds 70% of the nominal value thereof, a step (102) for controlling the closure of a first isolating circuit breaker in order to connect the bus to the first terminal without passing through the surge current limiter,

**characterised in that** the method comprises when applying a voltage from the second catenary:

a step (84) for controlling the closure of the initial load circuit breaker in order to connect the bus to the first terminal by means of the same surge current limiter, then
when the continuous voltage of the bus has reached at least 70% of a maximum intermediate voltage defined by the following relationship:

$$V_{mi} = \frac{V_2}{V_1} \times V_n$$

where:

$V_{mi}$ is the maximum intermediate voltage,
$V_1$ is the first voltage,
$V_2$ is the second voltage, and
$V_n$ is the nominal voltage,

a step (90) for controlling the rectifier-booster in order to rectify and boost the alternating voltage which is delivered by the first terminal and to supply the bus with the thus rectified and boosted voltage, then when the continuous voltage on the bus reaches at least 70% of the nominal voltage, a step (92) for controlling the disconnection of the bus from the first terminal and a step (94) for controlling the closure of a second isolating circuit breaker in order to connect the bus to the second terminal without passing through the initial load circuit.

2. Method according to claim 1, **characterised in that,** when the initial load circuit breaker is closed, the rectifier-booster is not controlled and functions as a diode bridge.

3. Method according to any of the preceding claims, **characterised in that** the rectifier-booster is systematically controlled (90, 96) in order to function as rectifier and as booster when the first or the second isolating circuit breaker is closed.

4. Data storage medium, **characterised in that** it comprises instructions for implementing a method for applying voltage according to any of the preceding claims when these instructions are implemented by an electronic computer.

5. System for applying a voltage to a continuous supply bus of an electric motor which operates an electric vehicle so that the continuous voltage of the bus reaches a nominal value, this system comprising:

   - a main transformer (34), the primary of which can be connected to a first catenary which delivers a first alternating voltage ($V_1$) and, alternately, to a second catenary which delivers a second alternating voltage ($V_2$) which is lower, the main transformer being fitted to the secondary of a first and of a second connection terminal (40, 41) corresponding respectively to a first and second winding ratio of the transformer, the second ratio of the transformer being greater than the first winding ratio,
   - a controllable circuit (46) for applying a voltage connected to the first and to the second terminals of the main transformer, this circuit comprising:
   - a limiter (62) of surge current due to at least one unit (24) for temporary storage of rechargeable energy of the bus,
   - an initial load circuit breaker (64) which is able to connect the bus to the first terminal by means of the surge current limiter,
   - a first isolating circuit breaker (58) which is able to connect the bus to the first terminal without passing through the surge current limiter, and
   - a second isolating circuit breaker (60) which is able to connect the bus to the second terminal without passing through the surge current limiter,
   - a controllable voltage rectifier-booster (44) which is connected to the supply bus in order to supply it with rectified voltage constructed from an alternating voltage delivered through the circuit for applying a voltage via the first or the second terminal, and
   - a unit (70) for controlling the circuit for applying a voltage and the rectifier-booster,

   **characterised in that** the control unit is programmed in order to implement a method for applying a voltage according to any of the claims 1 to 3.

6. System according to claim 5, **characterised in that** the circuit (46) for applying a voltage comprises a single common surge current limiter (62) for applying a voltage from the first catenary, and, alternately, from the second catenary.

7. System according to claim 5 or 6, **characterised in that** the surge current limiter (62) is a resistor.

8. Electric vehicle, **characterised in that** it comprises a system for applying a voltage according to any of the claims 5 to 7.

**Patentansprüche**

1. Verfahren zur Belegung eines Versorgungsbusses eines elektrischen Drehmotors eines elektrischen Fahrzeugs mit Gleichspannung, derart, dass dann, wenn die Gleichspannung des Busses einen Nennwert erreicht, der Bus durch einen nacheinander geschalteten Gleichrichter-Heber, der durch Spannung steuerbar ist, und einen Haupttransformator mit einer ersten Fahrleitung verbindbar ist, die eine erste Wechselspannung ($V_1$) führt, wechselweise mit einer zweiten Fahrleitung, die eine zumindest angehobene zweite Wechselspannung ($V_2$) führt, wobei der Haupttransformator mit einer sekundären einer ersten und einer zweiten Verbindungsklemme ausgestattet ist, entsprechend jeweils einem ersten und einem zweiten Wicklungsverhältnis des Haupttransformators, wobei das zweite Wicklungsverhältnis größer ist als das erste Wicklungsverhältnis, welches Verfahren bei Belegung des Busses mit Spannung durch die erste Fahrleitung umfaßt:

   - einen Schritt (100) der Steuerung des Schließens eines Vorladungsschalters zur Verbindung des Busses mit der ersten Klemme durch einen Begrenzer des Spannungsimpulses aufgrund zumindest einer temporären Speicherung wieder aufladbarer Energie des Busses, anschließend

- wenn die Gleichspannung des Busses 70% des Nennwerts erreicht, einen Schritt (102) zur Steuerung des Schließens eines ersten Isolationsschalters zum Verbinden des Busses mit der ersten Klemme ohne Verbindung über den Begrenzer des Spannungsimpulses,

**dadurch gekennzeichnet, dass** das Verfahren bei Belegung des Busses mit der Spannung der zweiten Fahrleitung die folgenden Schritte umfaßt:

- einen Schritt (84) zur Steuerung des Schließens des Vorladungsschalters zum Verbinden des Busses mit der ersten Klemme durch Zwischenschaltung des gleichen Spannungsbegrenzers, und dann
- wenn die Gleichspannung des Busses zumindest 70% an der maximalen Zwischenspannung erreicht, die durch die folgende Beziehung definiert ist:

$$V_{mi} = \frac{V_2}{V_1} \times V_n$$

mit:

V_{mi} als maximale Zwischenspannung,
$V_1$ als erste Spannung,
$V_2$ als zweite Spannung, und
$V_n$ als Nennspannung,

einem Schritt (90) zur Steuerung des Gleichrichter-Hebers zur Gleichrichtung und Anhebung der Wechselspannung, die von der ersten Klemme geliefert wird und zur Versorgung des Busses mit der derartig gleichgerichteten und angehobenen Spannung, und anschließend
- wenn die Gleichspannung auf dem Bus zumindest 70% der Nennspannung erreicht, einem Schritt (92) zur Steuerung der Unterbrechung des Busses von der ersten Klemme und einem Schritt (94) zur Steuerung des Schließens eines zweiten Isolationsschalters zur Verbindung des Busses mit der zweiten Klemme ohne Verbindung über den Vorladungsschalter.

2. Verfahren gemäß Anspruch 1, **dadurch gekennzeichnet, dass** bei geschlossenem Vorladungsschalter der Gleichrichter-Heber nicht gesteuert wird und wie eine Diodenbrücke funktioniert.

3. Verfahren gemäß einem der vorhergehenden Ansprüche, **dadurch gekennzeichnet, dass** der Gleichrichter-Heber systematisch derart gesteuert wird (90,96), dass er als Gleichrichter-Heber funktioniert, wenn der Isolationsschalter geschlossen ist.

4. Datenspeicher, **dadurch gekennzeichnet, dass** er Befehle zur Ausführung eines Verfahrens zur Spannungsbelegung gemäß einem der vorhergehenden Ansprüche beinhaltet, welche Befehle durch einen elektronischen Rechner ausführbar sind.

5. System zur Belegung eines Versorgungsbusses eines elektrischen Drehmotors eines elektrischen Fahrzeugs mit Gleichspannung, derart, dass die Gleichspannung des Busses einen Nennwert erreicht, umfassend:

- einen Haupttransformator (34), dessen Primärseite mit einer ersten Fahrleitung verbindbar ist, die eine erste Wechselspannung ($V_1$) liefert, sowie wechselweise mit einer zweiten Fahrleitung, die eine zumindest angehobene zweite Wechselspannung ($V_2$) liefert, welcher Haupttransformator an der Sekundärseite mit einer ersten und einer zweiten Klemme (40,41) zur Verbindung versehen ist, jeweils entsprechend ersten und zweiten Wicklungsverhältnissen des Transformators, wobei das zweite Wicklungsverhältnis des Transformators größer ist als das erste Wicklungsverhältnis,
- einen Steuerschaltkreis (46) zur Spannungsbelegung der ersten und zweiten Klemmen des Haupttransformators, welcher Schaltkreis umfaßt:
- einen Begrenzer (62) des Spannungsimpulses aufgrund zumindest einer Einheit (24) zur temporären Speicherung aufladbarer Energie des Busses,
- einen Vorladungsschalter (46) zum Verbinden des Busses mit der ersten Klemme über den Spannungsimpulsbegrenzer,
- einen ersten Isolationsschalter (58) zur Verbindung des Busses mit der zweiten Klemme ohne Verbindung über den Spannungsimpulsbegrenzer, und
- einen zweiten Isolationsschalter (60) zur Verbindung des Busses mit der zweiten Klemme ohne Verbindung über den Spannungsimpulsbegrenzer,
welches System ferner umfaßt:
- einen Gleichrichter-Heber (44) der spannungssteuerbar ist, verbunden mit dem Versorgungsbus zur Versorgung mit gleichgerichteter Spannung aus einer Wechselspannung, die durch den Schaltkreis geliefert wird, der durch die erste oder die zweite Klemme mit Spannung versorgt wird, und
- eine Einheit (70) zur Steuerung des Schaltkreises zur Spannungsversorgung und des Gleichrichter-Hebers,

**dadurch gekennzeichnet, dass** die Steuereinheit dazu programmiert ist, ein Verfahren zur Spannungsversorgung gemäß einem der Ansprüche 1 bis 3 durchzuführen.

6. System gemäß Anspruch 5, **dadurch gekennzeichnet, dass** der Schaltkreis (46) zur Spannungsversorgung einen einzigen gemeinsamen Spannungsimpulsbegrenzer (62) zur Versorgung mit Spannung von der ersten Fahrleitung oder der zweiten Fahrleitung umfaßt.

7. System gemäß Anspruch 5 oder 6, **dadurch gekennzeichnet, dass** der Spannungsimpulsbegrenzer (62) ein Widerstand ist.

8. Elektrisches Fahrzeug, **gekennzeichnet durch** ein System zur Spannungsversorgung gemäß einem der Ansprüche 5 bis 7.

Fig.1

80

84

86

88

90

92

94

96

82

100

102

104

106

*Fig.2*

Fig.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1288060 A